# FASCICULE DE BREVET EUROPEEN

(11) **EP 0 896 985 B1**
(45) Date de publication et mention de la délivrance du brevet: **14.04.2004**
(21) Numéro de dépôt: 98401976.0
(22) Date de dépôt: 04.08.1998
(51) Int. Cl.: C08L 95/00

(54) **Procédé pour la préparation d'émulsions d'enrobés denses**
Verfahren zur Herstellung von dichten Aggregaten in Emulsion
Process for the preparation of dense aggregates in emulsion

(30) Priorité: 13.08.1997 FR 9710337
(43) Date de publication de la demande: 17.02.1999
(73) Titulaire: CECA S.A., 92800 Puteaux (FR)
(72) Inventeur: Barreto, Gilles, 75012 Paris (FR); Grampre, Lionel, 95300 Pontoise (FR); Navascues, Luc, 75011 Paris (FR)
(74) Mandataire: Treuil, Claude

(56) Documents cités:
- EP-A- 0 755 982
- WO-A-96/41839
- FR-A- 2 723 110

## Description

La présente invention concerne un perfectionnement dans la fabrication des matériaux routiers par enrobage de granulats à l'aide d'émulsions bitumineuses.

De longue date, on a préparé des enrobés bitumineux par enrobage à froid de granulats à l'aide d'émulsions bitumineuses. Dans cette utilisation, les émulsions cationiques ont été particulièrement prisées, à la fois pour la rapidité de la rupture de l'émulsion sur les granulats, ce qui élimine pour l'enrobé le risque d'une séparation par essorage spontané du liant encore émulsionné, et pour les qualités d'adhésivité de l'enrobé, ce qui met rapidement les ouvrages réalisés avec ces matériaux à l'abri d'un délavage à la première intempérie.

Les facteurs d'échec dans la réalisation d'un matériau bitumineux par enrobage d'une composition granulométrique avec une émulsion bitumineuse sont bien connus de l'homme du métier :
- au cours de l'enrobage, une déstabilisation trop rapide de l'émulsion au contact des granulats, qui a pour effet une mauvaise répartition finale du liant;
- au cours du transport de l'enrobé, une trop grande sensibilité de l'enrobé à la température, à l'évaporation, aux vibrations, qui a pour effet de le rendre difficile à décharger et en rendre difficile, voire impossible la mise en place ou son compactage.

Parmi les remèdes simples, l'augmentation de la teneur en eau à l'enrobage permet une meilleure répartition du liant au sein du granulat. La contrepartie est la lenteur de rupture de l'émulsion à l'enrobage, voire la surstabilisation, ce qui entraîne la perte d'émulsion non rompue et l'écoulement d'eaux sales au transport et le risque d'une arrivée de l'enrobé sur le chantier sous forme de "soupe", et donc de graves difficultés pour éliminer l'excès d'eau au compactage et pour obtenir une montée en cohésion importante. Le risque complémentaire est qu'avec des durées trop longues entre l'enrobage et l'arrivée sur chantier, l'enrobé arrive sur chantier pris en masse dans la benne, privé de maniabilité au déchargement, au passage sous le finisseur et au cylindrage.

L'utilisation de liant bitumineux mou améliore très certainement la maniabilité de l'enrobé, mais au prix d'une résistance mécanique faible et inacceptable de l'ouvrage. Dans tous les cas, le comportement de l'enrobé est très dépendant de sa teneur en eau, le domaine utile de teneur en eau est très étroit et par ailleurs, mal contrôlable.

Ces traits sont d'autant plus accusés que l'enrobé fabriqué est moins ouvert, et des perfectionnements restent attendus pour la fabrication des enrobés, notamment des enrobés denses à froid. (On entend par enrobés denses à froid les systèmes dont la fraction granulaire comporte un passant au tamis de 2 mm d'au moins 25 % et un passant au tamis de 80 µm d'au moins 5 % de sa masse totale.)

En ce qui concerne le facteur maniabilité de l'enrobé, une amélioration sensible a été obtenue, relatée dans le brevet français n°92 10908 (publication FR 2 695 664), qui consiste à réaliser un enrobé avec un liant de dureté donnée, avec une émulsion contenant à l'état dispersé deux bitumes, l'un dur, l'autre mou, dans des proportions telles que leur mélange ait la dureté finale souhaitée. La maniabilité lors de la mise en place est facilitée par le bitume mou, tandis que la qualité finale de l'ouvrage est atteinte par la formation en place d'un liant de dureté voulue par fusion des gouttelettes de bitume dur avec celles de bitume mou. Ce procédé n'apporte cependant pas de solution au contrôle de la vitesse de rupture de l'émulsion et donc de l'évolution physico-chimique du système granulats / émulsion depuis l'enrobeur jusque sous le cylindre de compactage.

Ce que l'on vise à obtenir est un enrobé dense qui, à la sortie du malaxeur, se présente avec un aspect granulaire noir et sec, assez rompu pour ne pas sédimenter, ni s'essorer, mais conservant sa maniabilité, et apte à développer sa cohésion lors de sa mise en place sous l'effet du cisaillement puissant du compacteur. Selon l'invention, on atteint ce résultat en enrobant les granulats avec une émulsion bitumineuse mixte constituée du mélange d'une émulsion à rupture rapide et d'une émulsion à rupture lente.

Pour la caractérisation de la réactivité des émulsions d'enrobage, la méthode de l'indice de rupture sur filler siliceux donne des résultats peu significatifs, voire opposés au comportement à la rupture lors de l'enrobage de matériaux sur chantier. Pour cette raison, nous caractérisons différemment le comportement à la rupture d'une émulsion. Par émulsion à rupture lente, on entend, au sens de la présente invention, des émulsions, cationiques ou non ioniques, qui donnent lieu à des ruptures peu importantes, voire des surstabilisations sur formule granulaire de chantier en des temps compris entre 25 minutes et 4 heures pour des teneurs en eau d'ajout (comptées par rapport à la masse des granulats stockés dans les conditions de chantier) comprises entre 1 % et 15 % ; la rupture est jugée peu importante quand le lessivage emporte la majorité (50 % ou plus) de l'émulsion ou du mastic. Par émulsion à rupture rapide, on entend au contraire des émulsions, cationiques qui donnent lieu à des ruptures importantes sur formule granulaire de chantier en des temps courts compris entre 20 secondes et 5 minutes pour des teneurs en eau d'ajout comprises entre 1 % et 15 % ; la rupture est jugée importante quand le lessivage laisse en place le mastic (moins de 25 % de l'émulsion est lessivée).

Il est tout à fait étonnant que par utilisation du mélange selon l'invention d'une émulsion à rupture lente et d'une émulsion à rupture rapide, on obtienne des qualités d'enrobage très supérieures à celle qu'on obtiendrait avec l'émulsion de même composition globale réalisée avec la phase aqueuse unique constituée du mélange des phases aqueuses des émulsions individuelles L'interprétation que l'on peut peut-être en donner de cette différence est que, si les phases aqueuses des émulsions mélangées constituent une phase aqueuse uniforme, les gouttelettes de bitumes conserveraient chacune le cortège des molécules émulsifiantes empruntées à la phase aqueuse dans laquelle elles ont été fabriquées et donc conserveraient leurs qualités propres de coalescence.

Sont des émulsifiants utilisables à la fabrication des émulsions à rupture lente (émulsifiants lents), les polyamines de suif, et plus particulièrement les suif (poly) propylène polyamines comme la suif propylène diamine (définition EINECS : amines, N-suif alkyltriméthylènedi-, RN = 61791-55-7), la suif dipropylène triamine (amines, N-suif alkyldipropylènetri-, RN = 61791-57-9), la suif tripropylène tétramine (amines, N-suif alkyltripropylènetétra-, RN = 68911-79-5, cette dernière étant industriellement bien représentée par le Polyram®S de CECA S.A.) ainsi que les sels d'ammonium quaternaire comme la suif propylène diamine quaternisée au chlorure de méthyle (composé de l'ion ammonium quaternaire, pentaméthylsuif alkyltriméthylènedi-, chlorure, RN = 68607-29-4) bien représentée par le Stabiram®MS3 de CECA S.A., et les dérivés oxyalkylés d'alcools gras comme par exemple les alcools gras éthoxylés avec une chaîne grasse avec un nombre de carbones de 12 à 22 et un nombre d'oxydes d'éthylène de 5 à 40.

Sont des émulsifiants utilisables à la fabrication des émulsions à rupture rapide (émulsifiants rapides), les alkylamidoamines de suif ou de taloil, leurs dérivés de cyclisation alkylimidazolines, ou leurs mélanges (mélanges de acides gras en C₈₋₂₂, produits de réaction avec les polyalkylènes en C₂₋₃ polyamines et les éthanolamines, RN = 84082-48-4, et de amides en C₈₋₂₂ N-[(diméthylamino)-3 propyl], RN = 84082-43-9), bien représentés par l'émulsifiant L60 de CECA S.A.

Pour gagner en maniabilité de l'enrobé tout en lui conservant l'aptitude à développer une cohésion finale importante, il est avantageux de fabriquer l'émulsion à rupture rapide à partir d'un bitume mou, et l'émulsion à rupture lente à partir de bitume dur. L'émulsion à rupture rapide sera alors fabriquée à partir d'un bitume de pénétration de 80 à 500, l'émulsion à rupture lente à partir d'un bitume de pénétration de 20 à 180/220. Il est entendu que le choix de ce qu'on appelle bitume dur ou bitume mou est relatif, les règles en étant celles, connues, de composition des viscosités des mélanges de liant pour obtenir la viscosité souhaitée du bitume qui résultera du mélange final dans l'enrobé des deux liants composants. Ces règles sont rappelées dans le brevet français n°92 10908 déjà cité.

Les enrobés qu'on réalise à l'aide de ces émulsions, et plus particulièrement les enrobés denses, présentent les avantages des deux émulsions utilisées pour leur fabrication, à savoir d'excellentes qualités d'enrobage, de maniabilité à la reprise et la première mise en place, et de fortes cohésions finales. Ils n'en ont pas les inconvénients, car ils ne créent guère de difficulté au serrage sous le compacteur, et leur comportement est très peu sensible à la teneur en eau, tant en eau d'ajout qu'en eau intrinsèque des granulats. C'est un avantage considérable sur chantier, où la quantité d'eau d'un granulat est une grandeur aléatoire, varie selon l'état de son prélèvement en carrière et de son stockage aux intempéries.

Les émulsions selon l'invention seront également fort appréciées pour les travaux de revêtements superficiels (monocouches et bicouches à l'émulsion) pour leur aptitude à la formation rapide de la mosaïque.

### EXEMPLES

Dans les exemples qui suivent, les granulats sont des quartzites, de granulométrie 0-10. Les bitumes sont des 35/50 et 180/220 Esso.

On a préparé les émulsions mixtes selon le mode opératoire prescrit dans FR 92 10908, qui consiste à préparer les émulsions individuelles de base avec une teneur en liant dur ou mou de 65 % (650 kg par tonne d'émulsion) et des phases aqueuses acidifiées à l'acide chlorhydrique de façon à ce que leur pH soit de 2, les émulsions mixtes étant formées par mélange des émulsions individuelles de bitume dur et mou dans une proportion de 65 %-35 % de façon à ce que le liant moyen corresponde à un bitume de pénétrabilité 70. Les enrobés sont exécutés à une teneur en liant de 5,5 %.

### Exemple 1 : Emulsions mixtes lentes selon l'art antérieur

On réalise deux émulsions, l'une de bitume 35/50, l'autre de bitume 180/220, chacune avec une teneur en suif tripropylène tétramine (Polyram®S) de 4 kg par tonne d'émulsion. L'émulsion mixte est l'émulsion réalisée par mélange de 65 % de l'émulsion de bitume dur avec 35 % de l'émulsion de bitume mou.

L'enrobage est effectué dans un malaxeur planétaire SR Consulting, type SRC5. La variable explorée est la quantité d'eau ajoutée au granulat. On procède de la manière suivante : après versement des granulats dans le malaxeur planétaire, on effectue un malaxage d'une durée de 30 secondes. On verse ensuite l'eau d'ajout. Cette quantité ajoutée est de 4 %, 5 %, 6 %, 7 % et 8 % par rapport à la masse des granulats stockés à 20°C sans contrôle de l'humidité. On effectue un nouveau malaxage de 30 secondes avant de rajouter l'émulsion. On procède de nouveau à un malaxage de 30 secondes avec tous les composants du système final.

Le mode de compactage est le compactage à la Presse de Cisaillement Giratoire (modèle Invelop Oy ICT-100RB). A la sortie du malaxeur, l'enrobé est placé dans le moule PCG (moule cylindrique de 100 mm de diamètre et d'une hauteur de 25 cm) où il est stocké pendant 15 minutes avant le compactage.
Les éprouvettes, une fois formées à 6 bars, 120 girations, sont démoulées et abandonnées au vieillissement à 20°C sans contrôle de l'humidité pendant 1 h, 4 h ou 16 h avant d'être fracturées : l'éprouvette est placée en compression simple entre les mâchoires d'un banc de fracture Instron 4482. On impose la vitesse de déformation à 50 mm/min. On suit l'évolution de la force de réaction de l'éprouvette au cours de la déformation : la réaction maximale correspond à la charge à la rupture.

Les résultats sont apportés au tableau I.1 : qualité de l'enrobage, lessivage (exprimé en pourcentage de bitume récupéré par lessivage 1 mn après la fin de l'enrobage), couple final mesuré lors de l'expérience de PCG, densité apparente finale après PCG exprimée en taux de vide à 130 girations, aspect de l'eau de rupture. Le tableau I.2 présente les charges à la rupture sur les éprouvettes fabriquées à la PCG ("-" indique que l'éprouvette s'est délitée avant la fracture).

**Tableau I.1**

| Teneur en eau d'ajout | Enrobage | Lessivage | Couple final(N.m) | Taux de vide( %) | Eau de rupture |
|---|---|---|---|---|---|
| 4 % | bon | 70 % | 274 | 8,3 | sale |
| 5 % | bon | 70 % | 289 | 8,4 | sale |
| 6 % | soupe | 90 % | 275 | 9,5 | sale |
| 7 % | soupe | 90 % | 227 | 8,7 | sale |
| 8 % | soupe | 90 % | 234 | 6 | sale |

**Tableau I.2**

| Teneur en eau d'ajout | Vieillissement 1h | Vieillissement 4 h | Vieillissement 16 h |
|---|---|---|---|
| 4 % | 4,6 | 3,7 | 6,9 |
| 5 % | 3,8 | 3,7 | 3,9 |
| 6 % | 2,9 | 2,6 | 2 |
| 7 % | 1,4 | - | 0,7 |
| 8 % | 2,2 | 1,1 | 2,4 |
| moy. | 3 | 2,8 | 3,2 |

L'enrobage est complet dans tous les cas. Pour 4 % et 5 % d'eau d'ajout l'aspect de l'enrobé est "gras" et l'eau de rupture est chargée en émulsion. La rupture est partielle, à 30 %. A partir de 6 % d'eau d'ajout, l'enrobage donne une soupe, il y a surstabilisation. L'eau de rupture est très chargée en émulsion et la rupture concerne seulement 10 % de l'émulsion. Pour obtenir un meilleur comportement, il faudrait travailler à des teneurs en eau trop faibles compte tenu de la teneur en eau intrinsèque des granulats. Ce mauvais comportement à l'enrobage s'accompagne d'une forte dépendance du comportement mécanique face à l'eau d'ajout. Le couple final décroît avec la teneur en eau. Les charges à la rupture sont fluctuantes et parfois inexistantes lorsque l'on n'a pas réussi à démouler l'éprouvette trop fragile (bien que comprimée à 6 bars). Un tel système est impropre à la réalisation d'un enrobé.

### Exemple 2 : émulsions mixtes à rupture rapide selon l'art antérieur

On réalise deux émulsions, l'une de bitume 35/50, l'autre de bitume 180/220, chacune avec une teneur en alkylamidoamine de suif (émulsifiant L60 de CECA S.A.) de 4 kg par tonne d'émulsion. Toutes les autres conditions sont celles de l'exemple 1.

Les résultats sont rapportés au tableau II.1 : qualité de l'enrobage, lessivage (exprimé en pourcentage de bitume récupéré par lessivage 1 mn après la fin de l'enrobage), couple final mesuré lors de l'expérience de PCG, densité apparente finale après PCG exprimée en taux de vide à 120 girations, aspect de l'eau de rupture. Le tableau II.2 présente les charges à la rupture sur les éprouvettes fabriquées à la PCG.

**Tableau II.1**

| Teneur en eau d'ajout | Enrobage | Lessivage | Couple final(N.m) | Taux de vide( %) | Eau de rupture |
|---|---|---|---|---|---|
| 4 % | partiel | 5 % | 297 | 8,2 | claire |
| 5 % | partiel | 5 % | 307 | 7 | claire |
| 6 % | partiel | 5 % | 306 | 8,2 | claire |
| 7 % | partiel | 5 % | 306 | 8,1 | claire |
| 8 % | partiel | 5 % | 310 | 8,2 | claire |
| 10 % | partiel | 5 % | 301 | 7,3 | claire |
| 12 % | partiel | 5 % | 306 | 7,6 | claire |

**Tableau II.2**

| Teneur en eau d'ajout | Vieillissement 1 h | Vieillissement 4 h | Vieillissement 16 h |
|---|---|---|---|
| 4 % | - | 4,4 | - |
| 5 % | - | 5, 4 | - |
| 6 % | 3,8 | 5 | 5,9 |
| 7 % | 5,4 | 5,6 | 6,3 |
| 8 % | 5 | 6,2 | 7,1 |
| 10 % | 4,5 | - | 7, 5 |
| 12 % | 4,9 | - | 7,1 |
| moy. | 4,7 | 5,3 | 6,8 |

Bien que les charges à la rupture soient plus importantes que dans l'exemple 1, ce système ne convient pas, du fait de la trop grande réactivité des émulsions à base d'alkylamidoamines et alkylimidazolines, qui se traduit par un enrobage seulement partiel.

### Exemple 3 : émulsions mixtes selon l'invention

On réalise deux émulsions, l'une de bitume 35/50, avec une teneur en Polyram®S de 4 kg par tonne d'émulsion, l'autre de bitume 180/220, avec une teneur en l'émulsifiant L60, également de 4 kg par tonne d'émulsion. L'émulsion mixte est l'émulsion réalisée par mélange de 65 % de l'émulsion de bitume dur au Polyram®S avec 35 % de l'émulsion de bitume mou à l'émulsifiant L60.

Les résultats sont rapportés au tableau III.1 : qualité de l'enrobage, lessivage (exprimé en pourcentage de bitume récupéré par lessivage 1 minute après la fin de l'enrobage), couple final mesuré lors de l'expérience de PCG, densité apparente finale après PCG exprimée en taux de vide à 120 girations, aspect de l'eau de rupture. Le tableau II.2 présente les charges à la rupture sur les éprouvettes fabriquées à la PCG.

**Tableau III.1**

| Teneur en eau d'ajout | Enrobage | Lessivage | Couple final(N.m) | Taux de vide( %) | Eau de rupture |
|---|---|---|---|---|---|
| 4 % | bon | 5 % | 293 | 7,5 | claire |
| 5 % | bon | 5 % | 296 | 7,1 | claire |
| 6 % | bon | 5 % | 293 | 8,3 | claire |
| 7 % | bon | 5 % | 280 | 7 | claire |
| 8 % | bon | 10 | 282 | 8,4 | claire |

**Tableau III.2**

| Teneur en eau d'ajout | Vieillissement 1 h | Vieillissement 4 h | Vieillissement 16 h |
|---|---|---|---|
| 4 % | 3,9 | 6,9 | 8,5 |
| 5 % | 5,3 | 6,8 | 9,1 |
| 6 % | 4,2 | 7 | 8,1 |
| 7 % | 6,6 | 7 | 10,2 |
| 8 % | 5,9 | 7 | 8,4 |
| moy. | 5,2 | 6,9 | 8,9 |

L'enrobage est complet et dépend ici beaucoup moins de la teneur en eau d'ajout. Le lessivage n'emporte que très peu d'émulsion dans tous les cas. Cette insensibilité face à la teneur en eau d'ajout concerne aussi le comportement mécanique de l'enrobé lors de sa mise en forme, visible par l'intermédiaire du couple final obtenu pendant l'expérience de PCG. Les résistances mécaniques obtenues sont excellentes et sont associées à des teneurs en vide plus faibles que dans les deux exemples précédents.

## Revendications

1. Procédé pour la réalisation d'enrobés denses par enrobage de granulats à l'émulsion bitumineuse, **caractérisée en ce que** l'émulsion est constituée du mélange de deux émulsions,
- l'une des émulsions étant réalisée avec un émulsifiant cationique ou non ionique apte à fournir des émulsions à rupture lente (émulsion lente),
- l'autre émulsion étant réalisée avec un émulsifiant cationique apte à fournir des émulsions à rupture rapide (émulsion rapide).

2. Procédé selon la revendication 1, **caractérisé en ce que** l'émulsion lente est une émulsion cationique ou non ionique d'un liant bitumineux de pénétrabilité de 20 à 180/220.

3. Procédé selon la revendication 1, **caractérisé en ce que** l'émulsion rapide est une émulsion cationique d'un liant bitumineux de pénétrabilité de 80 à 500.

4. Procédé selon les revendications 1 à 3, **caractérisé en ce que** l'enrobé dense réalisé a une teneur en liant résiduel sur formule granulaire de chantier de 3,5 % à 7 %.

5. Procédé selon les revendications 1 ou 2, **caractérisé en ce que** l'émulsifiant lent est une polyamine de suif, et plus particulièrement la suif propylène diamine, la suif dipropylène triamine, la suif tripropylène tétramine.

6. Procédé selon les revendications 1 ou 2, **caractérisé en ce que** l'émulsifiant lent est un sel d'ammonium quaternaire, et en particulier la suif propylène diamine quaternisée au chlorure de méthyle.

7. Procédé selon les revendications 1 ou 2, **caractérisé en ce que** l'émulsifiant lent est un dérivé oxyalkylé d'alcool gras, et en particulier un alcool gras éthoxylé avec une chaîne grasse avec un nombre de carbones de 12 à 22 et un nombre d'oxydes d'éthylène de 5 à 40.

8. Procédé selon les revendications 1 ou 2, **caractérisé en ce que** l'émulsifiant rapide est une alkylamidoamine de suif ou de taloil, ou un de leurs dérivés de cyclisation alkylimidazolines.

9. Emulsion de bitume constituée du mélange de deux émulsions,
- l'une des émulsions, cationique ou non ionique, ayant été réalisée avec un émulsifiant apte à fournir des émulsions à rupture lente (émulsion lente),
- l'autre émulsion, cationique, ayant été réalisée avec un émulsifiant apte à fournir des émulsions à rupture rapide (émulsion rapide).

10. Emulsion de bitume selon la revendication 9, **caractérisée en ce que** l'émulsion lente est une émulsion d'un bitume de pénétrabilité de 20 à 180/220 et que l'émulsion rapide est une émulsion de bitume de pénétrabilité de 80 à 500.

11. Emulsion de bitume selon la revendication 9, constituée du mélange d'une émulsion d'un liant bitumineux de pénétrabilité de 20 à 180/220 réalisée à l'aide d'une suif polypropylène polyamine comme émulsifiant lent, et d'une émulsion d'un liant bitumineux de pénétrabilité de 80 à 500 réalisée à l'aide d'alkylamidoamine de suif ou de taloil ou de leur mélange avec leurs dérivés alkylimidazolines de cyclisation comme émulsifiant rapide.

## Patentansprüche

1. Verfahren zur Herstellung von dichtem Mischgut durch Umhüllung von Granulaten mit Bitumenemulsion, **dadurch gekennzeichnet, dass** die Emulsion aus einem Gemisch von zwei Emulsionen besteht, wobei
- die eine Emulsion mit einem kationischen oder nichtionischen Emulgator hergestellt wird, der dazu geeignet ist, langsam brechende Emulsionen bereitzustellen (langsame Emulsion);
- die andere Emulsion mit einem kationischen Emulgator hergestellt wird, der dazu geeignet ist, schnell brechende Emulsionen bereitzustellen (schnelle Emulsion).

2. Verfahren nach Anspruch 1, **dadurch gekennzeichnet, dass** die langsame Emulsion eine kationische oder nichtionische Emulsion eines bituminösen Bindemittels mit einer Penetration von 20 bis 180/220 ist.

3. Verfahren nach Anspruch 1, **dadurch gekennzeichnet, dass** die schnelle Emulsion eine kationische Emulsion eines bituminösen Bindemittels mit einer Penetration von 80 bis 500 ist.

4. Verfahren nach den Ansprüchen 1 bis 3, **dadurch gekennzeichnet, dass** das dichte Mischgut mit einem restlichen Gehalt an Bindemittel in der Baustellen-Granulatformulierung von 3,5 % bis 7 % hergestellt wird.

5. Verfahren nach Anspruch 1 oder 2, **dadurch gekennzeichnet, dass** der langsame Emulgator ein Talgpolyamin und insbesondere Talgpropylendiamin, Talgdipropylentriamin, Talgtripropylentetramin ist.

6. Verfahren nach Anspruch 1 oder 2, **dadurch gekennzeichnet, dass** der langsame Emulgator ein quarternäres Ammoniumsalz und insbesondere mit Methylchlorid quarternisiertes Talgpropylendiamin ist.

7. Verfahren nach Anspruch 1 oder 2, **dadurch gekennzeichnet, dass** der langsame Emulgator ein Fettalkoholalkoxylat und insbesondere ein Fettalkoholethoxylat mit einer Fettkette mit 12 bis 22 Kohlenstoffatomen und 5 bis 40 EthylenoxidEinheiten ist.

8. Verfahren nach Anspruch 1 oder 2, **dadurch gekennzeichnet, dass** der schnelle Emulgator ein Talg- oder Tallölalkylamidoamin oder ein Alkylimidazolin-Cyclisierungsderivat davon ist.

9. Bitumenemulsion, bestehend aus dem Gemisch von zwei Emulsionen, wobei
- die eine, kationische oder nichtionische, Emulsion mit einem Emulgator hergestellt ist, der dazu geeignet ist, langsam brechende Emulsionen bereitzustellen (langsame Emulsion);
- die andere, kationische, Emulsion mit einem Emulgator hergestellt ist, der dazu geeignet ist, schnell brechende Emulsionen bereitzustellen (schnelle Emulsion).

10. Bitumenemulsion nach Anspruch 9, **dadurch gekennzeichnet, dass** die langsame Emulsion eine Emulsion eines Bitumens mit einer Penetration von 20 bis 180/220 ist, und dass die schnelle Emulsion eine Bitumenemulsion mit einer Penetration von 80 bis 500 ist.

11. Bitumenemulsion nach Anspruch 9, bestehend aus dem Gemisch von einer Emulsion eines bituminösen Bindemittels mit einer Penetration von 20 bis 180/220, die mithilfe eines Talgpolypropylenpolyamins als langsamem Emulgator hergestellt ist, und einer Emulsion eines bituminösen Bindemittels mit einer Penetration von 80 bis 500, die mithilfe eines Talg- oder Tallölalkylamidoamins oder deren Gemisch mit ihren Alkylimidazolin-Cyclisierungsderivaten als schnellem Emulgator hergestellt ist.

## Claims

1. Process for the production of dense bituminous mixes by coating granulates with bituminous emulsion, **characterized in that** the emulsion consists of the mixture of two emulsions,
- one of the emulsions being produced with a cationic or nonionic emulsifier capable of supplying slow-breaking emulsions (slow emulsion),
- the other emulsion being produced with a cationic emulsifier capable of supplying fast-breaking emulsions (fast emulsion).

2. Process according to Claim 1, **characterized in that** the slow emulsion is a cationic or nonionic emulsion of a bituminous binder of 20 to 180/220 penetrability.

3. Process according to Claim 1, **characterized in that** the fast emulsion is a cationic emulsion of a bituminous binder of 80 to 500 penetrability.

4. Process according to Claims 1 to 3, **characterized in that** the dense bituminous mix produced has a residual binder content on site granular formulation of 3.5% to 7%.

5. Process according to Claim 1 or 2, **characterized in that** the slow emulsifier is a tallow polyamine, and more particularly tallow propylenediamine, tallow dipropylenetriamine or tallow tripropylenetetramine.

6. Process according to Claim 1 or 2, **characterized in that** the slow emulsifier is a quaternary ammonium salt, and in particular tallow propylenediamine quaternized with methyl chloride.

7. Process according to Claim 1 or 2, **characterized in that** the slow emulsifier is an alkoxylated derivative of fatty alcohol, and in particular an ethoxylated fatty alcohol with a fatty chain with a number of carbons from 12 to 22 and a number of ethylene oxides from 5 to 40.

8. Process according to Claim 1 or 2, **characterized in that** the fast emulsifier is a tallow or tall oil alkylamidoamine or one of their alkylimidazoline cyclization derivatives.

9. Bitumen emulsion consisting of the mixture of two emulsions,
- one of the emulsions, cationic or nonionic, having been produced with an emulsifier capable of supplying slow-breaking emulsions (slow emulsion),
- the other emulsion, cationic, having been produced with an emulsifier capable of supplying fast-breaking emulsions (fast emulsion).

10. Bitumen emulsion according to Claim 9, **characterized in that** the slow emulsion is an emulsion of a bitumen of 20 to 180/220 penetrability and **in that** the fast emulsion is an emulsion of bitumen of 80 to 500 penetrability.

11. Bitumen emulsion according to Claim 9, consisting of the mixture of an emulsion of a bituminous binder of 20 to 180/220 penetrability, produced with the aid of a tallow polypropylene polyamine as slow emulsifier and of an emulsion of a bituminous binder of 80 to 500 penetrability, produced with the aid of tallow or of tall oil alkylamidoamine or of their mixture with their cyclization alkylimidazoline derivatives as fast emulsifier.
